(19) Europäisches Patentamt
European Patent Office
Office européen des brevets

(11) **EP 3 660 955 A1**

(12) **EUROPEAN PATENT APPLICATION**
published in accordance with Art. 153(4) EPC

(43) Date of publication:
**03.06.2020 Bulletin 2020/23**

(51) Int Cl.:
**H01M 4/13** (2010.01)  **H01M 4/139** (2010.01)
**H01M 4/62** (2006.01)  **H01M 4/66** (2006.01)

(21) Application number: **18837519.0**

(22) Date of filing: **24.07.2018**

(86) International application number:
**PCT/JP2018/027651**

(87) International publication number:
**WO 2019/022063 (31.01.2019 Gazette 2019/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.07.2017 JP 2017143392**

(71) Applicant: **GS Yuasa International Ltd.
Kyoto-shi, Kyoto 601-8520 (JP)**

(72) Inventor: **YAMAKAWA, Yuto
Kyoto-shi
Kyoto 601-8520 (JP)**

(74) Representative: **Isarpatent
Patent- und Rechtsanwälte Behnisch Barth
Charles
Hassa Peckmann & Partner mbB
Friedrichstrasse 31
80801 München (DE)**

(54) **ELECTRODE, POWER STORAGE ELEMENT, AND METHOD FOR MANUFACTURING ELECTRODE**

(57) One aspect of the present invention is an electrode comprising: a conductive substrate; an intermediate layer layered on a surface of the substrate and containing a conductive substance and a first binder; and an active material layer layered on a surface of the intermediate layer and containing a second binder. Each of the first binder and the second binder is an aqueous binder, or each of the first binder and the second binder is a nonaqueous solvent-based binder. The intermediate layer further contains an insulating filler.

Fig. 1

**Description**

TECHNICAL FIELD

The present invention relates to an electrode, an energy storage device, and a method for manufacturing the electrode.

BACKGROUND ART

A nonaqueous electrolyte secondary battery represented by a lithium ion secondary battery is often used, for its high energy density, in, for example, electronic devices such as a personal computer and a communication terminal, and vehicles and the like. The nonaqueous electrolyte secondary battery generally includes a pair of electrodes composed of a sheet-like positive electrode and negative electrode and a nonaqueous electrolyte interposed between the electrodes. The nonaqueous electrolyte secondary battery is configured to allow ions to be transferred between both the electrodes for charge-discharge. Capacitors such as a lithium ion capacitor and an electric double layer capacitor are also widely used as energy storage devices other than the nonaqueous electrolyte secondary battery.

The electrode normally has a structure in which an active material layer is layered on the surface of a conductive substrate. An electrode has also been developed, in which an intermediate layer is provided between a substrate and an active material layer in order to increase electric resistance (hereinafter sometimes simply referred to as "resistance") to make it difficult for a current to flow when the temperature of an energy storage device rises. Thus, the resistance of the electrode increases when the temperature rises, whereby the current can be reduced to further suppress temperature rise or the like. This temperature rise does not occur in a normal usage form, but may occur when the electrode is used in a form other than the normal usage form normally foreseen, such as misuse.

As a technique related to such a shutdown function, a nonaqueous secondary battery including an electrode having a layer containing a conductive substance and polyvinylidene fluoride as an intermediate layer has been proposed (see Patent Document 1).

PRIOR ART DOCUMENT

PATENT DOCUMENT

Patent Document 1: JP-A-2015-038876

SUMMARY OF THE INVENTION

PROBLEMS TO BE SOLVED BY THE INVENTION

The electrode having the intermediate layer and the active material layer as described above is generally produced by sequentially layering the intermediate layer and the active material layer by coating. However, when the active material layer is formed on the surface of the intermediate layer by coating, a binder of the intermediate layer may be eluted. The increased elution amount of the binder in the intermediate layer affects the variation in resistance of an electrode to be obtained and a resistance increasing function when the temperature rises. When the content of the binder in the intermediate layer is reduced, the elution amount is reduced, but the resistance increasing function when the temperature rises is insufficient.

The present invention has been made based on the above circumstances, and an object thereof is to provide an electrode having a sufficient resistance increasing function when the temperature rises and suppressed variation in resistance, an energy storage device including the electrode, and a method for manufacturing the electrode.

MEANS FOR SOLVING THE PROBLEMS

One aspect of the present invention made to solve the above problems is an electrode comprising: a conductive substrate; an intermediate layer layered on a surface of the substrate and containing a conductive substance and a first binder; and an active material layer layered on a surface of the intermediate layer and containing a second binder, wherein: each of the first binder and the second binder is an aqueous binder, or each of the first binder and the second binder is a nonaqueous solvent-based binder; and the intermediate layer further contains an insulating filler.

Another aspect of the present invention is an energy storage device comprising the electrode.

Another aspect of the present invention is a method for manufacturing an electrode, the method comprising the steps of layering an intermediate layer containing a conductive substance and a first binder on a surface of a conductive substrate; and layering an active material layer containing a second binder on a surface of the intermediate layer, wherein: each of the first binder and the second binder is an aqueous binder, or each of the first binder and the second binder is a nonaqueous solvent-based binder; and the intermediate layer further contains an insulating filler.

ADVANTAGES OF THE INVENTION

The present invention can provide an electrode which has a sufficient resistance increasing function when the temperature rises and suppressed variation in resistance, an energy storage device including the electrode, and a method for manufacturing the electrode.

BRIEF DESCRIPTION OF THE DRAWINGS

Fig. 1 is a schematic cross-sectional view of an electrode according to an embodiment of the present invention.
Fig. 2 is an external perspective view showing an embodiment of an energy storage device according to the present invention.
Fig. 3 is a schematic diagram showing an energy storage apparatus configured by assembling a plurality of energy storage devices according to an embodiment of the present invention.

MODE FOR CARRYING OUT THE INVENTION

An electrode according to an embodiment of the present invention comprises: a conductive substrate; an intermediate layer layered on a surface of the substrate and containing a conductive substance and a first binder; and an active material layer layered on a surface of the intermediate layer and containing a second binder, wherein: each of the first binder and the second binder is an aqueous binder, or each of the first binder and the second binder is a nonaqueous solvent-based binder; and the intermediate layer further contains an insulating filler.

The electrode has a sufficient resistance increasing function when the temperature rises, and suppressed variation in resistance. That is, the electrode can exhibit a good shutdown function when the temperature rises. The reason why the present embodiment exhibits such an effect is not clear, but the following reason is presumed. When the first binder contained in the intermediate layer and the second binder contained in the active material layer are the same system (aqueous or nonaqueous solvent system), and a paste for forming the active material layer is applied, the elution of the first binder contained in the intermediate layer into the paste is apt to occur. For example, when the first binder contained in the intermediate layer is an aqueous binder, and a paste containing water as a dispersion medium is applied to the surface of the intermediate layer, the first binder is eluted in water in the paste. Similarly, when the first binder contained in the intermediate layer is a nonaqueous solvent-based binder, and a paste containing a nonaqueous solvent as a dispersion medium is applied to the surface of the intermediate layer, the first binder is eluted in the nonaqueous solvent in the paste. Meanwhile, if the content of the first binder in the intermediate layer is decreased, the elution amount is decreased, but a sufficient resistance increasing function when the temperature rises is not exhibited. The resistance increasing function when the temperature rises is due to the fact that the first binder expands due to heating, thereby reducing the number of contacts between the conductive substances. Therefore, by adding an insulating filler to the intermediate layer in addition to the conductive substance and the first binder, the elution amount of the first binder can be suppressed while a sufficient resistance increasing function is maintained when the temperature rises, whereby the variation in resistance can be suppressed. The reason why the elution amount of the first binder can be suppressed by adding the insulating filler is presumed that the content of the first binder is relatively decreased by adding the insulating filler, and voids formed by the conductive substance and the insulating filler are filled with the first binder, to allow the first binder to be present in a state where the first binder is less likely to be eluted. It is presumed that, when the temperature rises, the presence of the insulating filler contributes to reduction in the number of contacts between the conductive substances along with the volume expansion of the first binder, whereby a good resistance increasing function is exhibited.

Here, the "aqueous binder" refers to a water-soluble binder. Normally, the aqueous binder is used with water as a solvent or a dispersion medium. The "nonaqueous solvent-based binder" refers to a binder which is soluble in a solvent other than water. Normally, the nonaqueous solvent-based binder is used with a solvent (liquid) other than water as a solvent or a dispersion medium. However, when a fluorine resin which is a nonaqueous solvent-based binder, and carboxymethyl cellulose (CMC) which is an aqueous binder, and the like are used in combination, CMC is generally dissolved in water, and the solution is used as a thickener. The solution is classified as the aqueous binder.

The first binder is preferably a polymer having a structural unit derived from vinylidene fluoride. The use of such a polymer as the first binder makes it possible to further improve the resistance increasing function when the temperature rises and further suppress the variation in resistance.

The volume of the insulating filler with respect to the total volume of the conductive substance and the insulating filler is preferably 20% or more and 95% or less. This makes it possible to optimize the volume ratio of the conductive substance and the insulating filler, further improve the resistance increasing function when the temperature rises while ensuring normal sufficient conductivity, and further suppress the variation in resistance.

The content of the conductive substance in the intermediate layer is preferably 5% by mass or more and 60% by mass or less. The content of the conductive substance set to the above range makes it possible to improve the resistance increasing function when the temperature rises while ensuring normal sufficient conductivity.

The content of the insulating filler in the intermediate layer is preferably 15% by mass or more and 80% by mass or less. The content of the insulating filler set to the above range makes it possible to further improve the resistance increasing function when the temperature rises while ensuring normal sufficient conductivity and further suppress the variation in resistance.

The content of the first binder in the intermediate layer is preferably 10% by mass or more and 50% by mass or less. The content of the first binder set to the above range makes it possible to further improve the resistance increasing function when the temperature rises while ensuring normal sufficient conductivity and further suppress the variation in resistance.

In the intermediate layer, it is preferable that the content of the conductive substance is 30% by mass or more and 40% by mass or less; the content of the insulating filler is 20% by mass or more and 30% by mass or less; and the content of the first binder is 30% by mass or more and 50% by mass or less. This makes it possible to optimize the ratio of the three components in the intermediate layer, further improve the resistance increasing function when the temperature rises while ensuring normal sufficient conductivity, and further suppress the variation in resistance.

The electrode is preferably a positive electrode. When the electrode is the positive electrode, the effect of the present embodiment such as a more sufficient resistance increasing function when the temperature rises is more remarkably exhibited.

The energy storage device according to one embodiment of the present invention is an energy storage device including the electrode. The electrode included in the energy storage device has a sufficient resistance increasing function when the temperature rises, and suppressed variation in resistance. Therefore, the energy storage device exhibits a good shutdown function when the temperature rises, and has high homogeneity.

A method for manufacturing an electrode according to an embodiment of the present invention is a method for manufacturing an electrode, the method comprising the steps of layering an intermediate layer containing a conductive substance and a first binder on a surface of a conductive substrate; and layering an active material layer containing a second binder on a surface of the intermediate layer, wherein: each of the first binder and the second binder is an aqueous binder, or each of the first binder and the second binder is a nonaqueous solvent-based binder; and the intermediate layer further contains an insulating filler.

The manufacturing method makes it possible to manufacture an electrode having a sufficient resistance increasing function when the temperature rises and suppressed variation in resistance.

Hereinafter, an electrode according to an embodiment of the present invention, a method for manufacturing the same, and an energy storage device will be described in detail.

<Electrode>

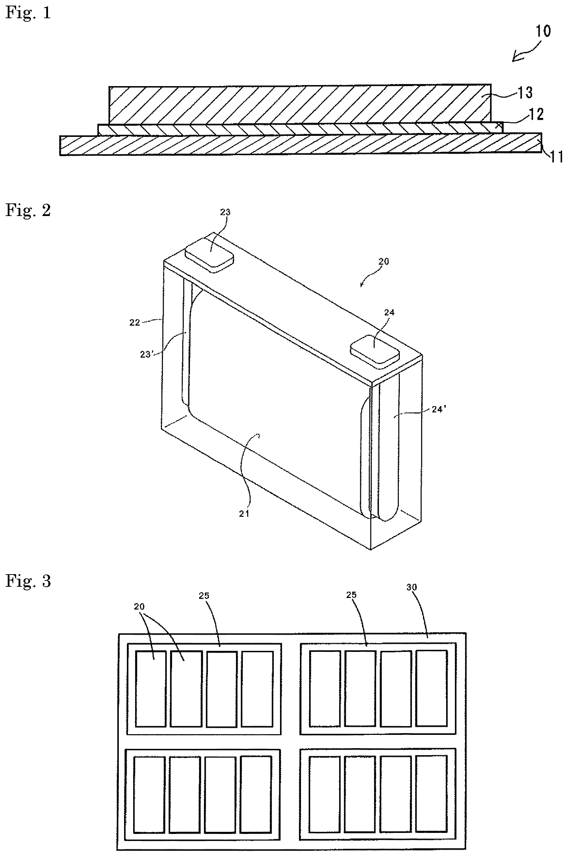

An electrode 10 in Fig. 1 includes a substrate 11, an intermediate layer 12, and an active material layer 13.

The substrate 11 has conductivity. Having "conductivity" means having a volume resistivity of $10^7$ $\Omega \cdot$cm or less which is measured in accordance with JIS-H-0505 (1975). The substrate 11 has a sheet shape.

When the electrode 10 is the positive electrode, metals such as aluminum, titanium, and tantalum, or alloys thereof are used as the material of the substrate 11 (positive electrode substrate). Among these, aluminum and an aluminum alloy are preferable from the balance among the potential resistance, conductivity level, and cost. That is, an aluminum foil is preferable as the positive electrode substrate. Examples of aluminum and the aluminum alloy include A1085P and A3003P specified in JIS-H-4000 (2014). Meanwhile, when the electrode 10 is a negative electrode, metals such as copper, nickel, stainless steel, and nickel-plated steel, or alloys thereof are used as the material of the substrate 11 (negative electrode substrate), and copper or a copper alloy is preferable. That is, a copper foil is preferable as the negative electrode substrate. Examples of the copper foil include a rolled copper foil and an electrolytic copper foil.

The average thickness of the substrate 11 may be, for example, 5 $\mu$m or more and 30 pm or less. The "average thickness" refers to an average value of thicknesses measured using a digital micrometer M-30 manufactured by Sony Corporation at arbitrary ten points. Hereinafter, the term "average thickness" is similarly defined for other members or the like.

The intermediate layer 12 is layered on the surface of the substrate 11 in a state where an end part is left. That is, the end part of the surface of the substrate 11 is exposed. The intermediate layer may be layered on both the surfaces (front and back surfaces) of the substrate.

The intermediate layer 12 contains a conductive substance, an insulating filler, and a first binder. In the electrode 10, the intermediate layer 12 contains the insulating filler, whereby the elution of the first binder is reduced, and as a result, the variation in resistance is suppressed.

A known conductive agent is used as the conductive substance. Examples of the conductive substance include a carbon material, a metal, and conductive ceramic, and the carbon material is preferable. Examples of the carbon material include natural or artificial graphite, and carbon blacks such as furnace black, acetylene black, and ketjen black. Among these, acetylene black is preferable.

The conductive substance is normally particulate. The conductive substance is particulate, whereby, when the first binder or the like expands when the temperature rises, the conductive substance particles are easily separated from each other, to allow an increase in resistance to be effectively provided.

The median diameter (D50) of the conductive substance may be, for example, 1 nm or more and 20 pm or less. The use of the conductive substance having such a size makes it possible to largely increase the resistance when the temperature rises while ensuring normal sufficient flowability. The "median diameter" means a value (D50) at which a volumetric basis integrated distribution calculated based on JIS-Z-8819-2 (2001) is 50%. Specifically, the median diameter (D50) can be measured by the following method. Measurement is performed using a laser diffraction particle size distribution measurement device ("SALD-2200" manufactured by Shimadzu Corporation) as a measurement device and WingSALD-2200 as measurement control software. A scattering measurement mode is employed. A wet cell in which a dispersion liquid circulates is irradiated with laser light to obtain a scattered light distribution from a measurement sample. In the dispersion liquid, particles of a sample to be measured are dispersed in a dispersion solvent. The scattered light distribution is approximated by a lognormal distribution, and a particle size corresponding to a cumulative degree of 50% (D50) is defined as the median diameter. The median diameter based on the above measurement is confirmed to substantially coincide with a number average particle size measured by extracting 100 particles avoiding extremely large particles and extremely small particles from the scanning electron microscope (SEM) image of the intermediate layer.

The lower limit of the content of the conductive substance in the intermediate layer 12 is preferably 5% by mass, more preferably 8% by mass, still more preferably 15% by mass, and yet still more preferably 30% by mass. The content of the conductive substance set to be equal to or greater than the above lower limit can ensure normal sufficient conductivity, and improve the resistance increasing function when the temperature rises. Meanwhile, the upper limit of the content is preferably 60% by mass, more preferably 50% by mass, and still more preferably 40% by mass. The content of the conductive substance set to be equal to or less than the upper limit can improve the resistance increasing function when the temperature rises.

The insulating filler may be either an inorganic filler or an organic filler, but it is preferably an inorganic filler. The use of the inorganic filler makes it possible to increase heat resistance.

Examples of inorganic substances forming the inorganic filler include inorganic oxides such as silica, alumina, titania, zirconia, magnesia, ceria, yttria, zinc oxide, and iron oxide, inorganic nitrides such as silicon nitride, titanium nitride, and boron nitride, and other materials such as silicon carbide, calcium carbonate, aluminum sulfate, aluminum hydroxide, potassium titanate, talc, kaolin clay, kaolinite, boehmite, halloysite, pyrophyllite, montmorillonite, sericite, mica, amesite, bentonite, asbestos, aluminosilicate, calcium silicate, magnesium silicate, diatom earth, silica sand, and glass. Among these, inorganic oxides are preferable, and alumina is more preferable.

Examples of organic substances forming the organic filler include polyolefins such as polyethylene and polypropylene, polyester, an acrylic resin, polyvinylidene chloride, polycarbonate, polyamide, a phenol resin, a melamine resin, and a urea resin. It is preferable that the organic substances are insoluble in a solvent which can disperse or dissolve the second binder.

The lower limit of the median diameter (D50) of the insulating filler is preferably 0.001 pm, more preferably 0.005 pm, and still more preferably 0.01 pm. Meanwhile, the upper limit of the median diameter is preferably 5 pm, more preferably 1 pm, still more preferably 0.5 pm, yet still more preferably 0.1 pm, and particularly preferably 0.03 pm. The use of the insulating filler having such a particle size makes it possible to further improve the resistance increasing function when the temperature rises.

The lower limit of the bulk density of the insulating filler is preferably 0.01 $g/cm^3$, and more preferably 0.03 $g/cm^3$. Meanwhile, the upper limit of the bulk density is preferably 1 $g/cm^3$, more preferably 0.5 $g/cm^3$, still more preferably 0.2 $g/cm^3$, and yet still more preferably 0.1 $g/cm^3$. The use of the insulating filler having such a bulk density makes it possible to further improve the resistance increasing function when the temperature rises. The insulating filler having a low bulk density has high porosity. Therefore, the use of the insulating filler having a relatively low bulk density makes it easier to fill holes with the first binder to further reduce the elution of the first binder.

The lower limit of the content of the insulating filler in the intermediate layer 12 is preferably 15% by mass, and more preferably 20% by mass. The content of the insulating filler set to be equal to or greater than the above lower limit can further suppress the elution of the first binder, and the variation in resistance. Meanwhile, the upper limit of the content is preferably 80% by mass, more preferably 50% by mass, and still more preferably 30% by mass. The content of the insulating filler set to be equal to or less than the upper limit makes it possible to ensure normal sufficient conductivity and further improve the resistance increasing function when the temperature rises.

The lower limit of the volume of the insulating filler with respect to the total volume of the conductive substance and the insulating filler is preferably 20%, more preferably 30%, and still more preferably 35%. By setting the volume ratio of the insulating filler to the total of the conductive substance and the insulating filler to be equal to or greater than the above lower limit, the variation in resistance can be further suppressed. Meanwhile, the upper limit of the volume of the insulating filler with respect to the total volume of the conductive substance and the insulating filler is preferably 95%, more preferably 90%, still more preferably 85%, yet still more preferably 70%, and particularly preferably 50%. The volume ratio of the insulating filler with respect to the total of the conductive substance and the insulating filler set to be equal to or less than the above upper limit makes it possible to further improve the resistance increasing function when the temperature rises while ensuring normal sufficient conductivity.

As the first binder, a binder which can fix the insulating particles and is electrochemically stable within the range of use is normally used. The first binder may be an aqueous binder or a nonaqueous solvent-based binder.

The aqueous binder is not particularly limited as long as it is a polymer which is soluble or dispersible in water. Examples of the polymer which is soluble in water include a polymer containing a structural unit having a polar group such as a carboxy group or a hydroxyl group. Examples of the polymer dispersible in water include a rubber and an elastomer. Examples of the polymer which can be dispersed in water include a polymer which can be dispersed in water by an emulsifier. Specific examples of the aqueous binder include polyvinyl alcohol, an ethylene-vinyl alcohol copolymer, polymethyl methacrylate, polyethylene oxide, polypropylene oxide, polyacrylic acid, polymethacrylic acid, styrene butadiene rubber (SBR), ethylene-propylene-diene rubber (EPDM), a fluoro-rubber, a polysaccharide polymer, and a mixture of a fluorine resin such as polyvinylidene fluoride (PVDF) and a thickener containing an aqueous paste such as carboxymethylcellulose (CMC).

The nonaqueous solvent-based binder is not particularly limited as long as it is a polymer which is soluble or dispersible in the nonaqueous solvent. Examples of the nonaqueous solvent include aprotic polar solvents such as N-methyl-2-pyrrolidone (NMP), dimethylformamide (DMF), dimethylacetamide (DMA), and dimethyl sulfoxide (DMSO). Specific examples of the nonaqueous solvent-based binder include a fluorine resin, polyolefin (polyethylene, polypropylene, and the like), and polyimide.

The nonaqueous solvent-based binder is preferably a fluorine resin from the viewpoint of heat resistance and the like. The fluorine resin refers to a resin containing a fluorine atom, and is normally a resin having a structural unit containing a fluorine atom. Examples of the fluorine resin include polytetrafluoroethylene (PTFE), polyvinylidene fluoride (PVDF), polyvinyl fluoride (PVF), and a perfluoroalkoxy fluorine resin (PFA).

The fluorine resin is more preferably a polymer (PVDF) having a structural unit ($-CH_2CF_2-$) derived from vinyli-dene fluoride from the viewpoint of heat resistance and the like. The polymer having a structural unit derived from vinylidene fluoride may be a homopolymer of vinylidene fluoride or a copolymer of vinylidene fluoride and another monomer. The lower limit of the content ratio of the structural unit derived from vinylidene fluoride in the total structural unit of the polymer having a structural unit derived from vinylidene fluoride is preferably 50 mol%, may be 70 mol%, may be 90 mol%, or may be 99 mol%.

The lower limit of the content of the first binder in the intermediate layer 12 is preferably 10% by mass, more preferably 20% by mass, and still more preferably 30% by mass. The content of the first binder set to the above lower limit or more makes it possible to further improve the resistance increasing function when the temperature rises. Meanwhile, the upper limit of the content is preferably 50% by mass. The content of the first binder set to be equal to or lower than the above upper limit makes it possible to ensure normal sufficient conductivity and further suppress the variation in resistance.

In the intermediate layer 12, it is preferable that the content of the conductive substance is 30% by mass or more and 40% by mass or less; the content of the insulating filler is 20% by mass or more and 30% by mass or less; and the content of the first binder is 30% by mass or more and 50% by mass or less. Thus, the ratio of the three components in the intermediate layer 12 is optimized. The resistance increasing function when the temperature rises can be further improved while normal sufficient conductivity is ensured, and the variation in resistance can be further suppressed.

The intermediate layer 12 may contain components other than the conductive substance, the insulating filler, and the first binder. Examples of such other components include a thickener and a dispersant. However, the upper limit of the content of the components other than the conductive substance, the insulating filler, and the first binder in the intermediate layer 12 is preferably 20% by mass, more preferably 10% by mass, still more preferably 5% by mass, and particularly preferably 1% by mass. By setting the content of the other components to be equal to or less than the above upper limit, the effect of the present embodiment is more sufficiently exhibited.

The lower limit of the average thickness of the intermediate layer 12 is, for example, preferably 0.1 pm, more preferably 1 pm, and still more preferably 3 pm. By setting the average thickness of the intermediate layer 12 to be equal to or greater than the above lower limit, the resistance increasing function when the temperature rises can be improved.

Meanwhile, the upper limit of the average thickness is, for example, preferably 20 pm, and more preferably 10 pm. By setting the average thickness of the intermediate layer 12 to be equal to or less than the above upper limit, normal sufficient conductivity can be ensured.

The lower limit of the mass per unit area of the intermediate layer 12 is, for example, preferably 0.1 $g/m^2$, more preferably 1 $g/m^2$, and still more preferably 3 $g/m^2$. By setting the mass per unit area of the intermediate layer 12 to be equal to or greater than the above lower limit, the resistance increasing function when the temperature rises can be improved. Meanwhile, the upper limit of the mass per unit area is, for example, preferably 20 $g/m^2$, and more preferably 10 $g/m^2$. By setting the mass per unit area of the intermediate layer 12 to be equal to or less than the above upper limit, normal sufficient conductivity can be ensured.

The active material layer 13 is layered on the surface of the intermediate layer 12. The active material layer 13 may be layered so as to completely cover the intermediate layer 12, or may be layered so that a part of the intermediate layer 12 is exposed. The active material layer 13 contains an active material and a second binder. The active material layer 13 may contain optional components such as a conductive substance, a thickener, and an insulating filler, as necessary.

Examples of the active material (positive electrode active material) when the electrode 10 is the positive electrode include composite oxides represented by $Li_xMO_y$ (M represents at least one transition metal) (such as $Li_x CoO_2$, $Li_x NiO_2$, $Li_x MnO_3$, $Li_x Ni_\alpha Co_{(1-\alpha)}O_2$, and $Li_x Ni_\alpha Mn_\beta Co_{(1-\alpha-\beta)}O_2$, and $Li_{1+w} Ni_\alpha Mn_\beta Co_{(1-\alpha-\beta-w)}O_2$ which have an $\alpha$-$NaFeO_2$ layered crystal structure, and $Li_x Mn_2 O_4$ and $Li_x Ni_\alpha Mn_{(2-\alpha)}O_4$ which have a spinel crystal structure) and polyanion compounds represented by $Li_w Me_x(AO_y)_z$ (Me represents at least one transition metal and A represents, for example, P, Si, B, or V) (such as $LiFePO_4$, $LiMnPO_4$, $LiNiPO_4$, $LiCoPO_4$, $Li_3 V_2(PO_4)_3$, $Li_2 MnSiO_4$, and $Li_2 CoPO_4 F$). The elements or the polyanions in these compounds may be partially substituted with another elements or anion species. In an electrode mixture layer, these compounds may be used alone or by mixing two or more of these compounds.

Examples of the active material (negative electrode active material) when the electrode 10 is the negative electrode include metals or metalloids such as Si and Sn; metal oxides or metalloid oxides such as a Si oxide and a Sn oxide; a polyphosphoric acid compound; and carbon materials such as graphite and non-graphitic carbon (easily graphitizable carbon or hardly graphitizable carbon).

Examples of the second binder contained in the active material layer 13 include the same as the first binder contained in the intermediate layer 12 described above. However, when the first binder is an aqueous binder, the second binder is also an aqueous binder. When the first binder is a nonaqueous solvent-based binder, the second binder is also a nonaqueous solvent-based binder. The resin type of the first binder and the resin type of the second binder may not completely coincide with each other. That is, for example, when the first binder is PVDF which is a nonaqueous solvent-based binder, the second binder may be PVDF or a nonaqueous solvent-based binder other than PVDF.

Each of the first binder and the second binder is preferably a nonaqueous solvent-based binder, more preferably a fluorine resin, and still more preferably a polymer having a structural unit derived from vinylidene fluoride. When such a resin is used, the heat resistance or the like of the electrode 10 is improved. Meanwhile, when the same kind of resin is used in the first binder and the second binder, a phenomenon that the first binder is eluted in the intermediate layer 12 is likely to occur when the active material layer 13 is formed by coating. Therefore, when the same kind of binder is used for the first binder and the second binder, the advantages of the present embodiment can be more effectively relished.

The lower limit of the average thickness of the active material layer 13 is, for example, 5 $\mu$m, and preferably 20 $\mu$m. Meanwhile, the upper limit is, for example, 300 $\mu$m, and preferably 200 $\mu$m.

The electrode 10 can be employed as either the positive electrode or the negative electrode, but it is preferably used as the positive electrode. When the electrode 10 is employed as the positive electrode, a particularly good resistance increasing function can be exhibited. The electrode 10 may be employed for both the positive electrode and the negative electrode.

<Method for Manufacturing Electrode>

The method for manufacturing the electrode 10 is not particularly limited, but for example, it can be performed by the following method. That is, the method for manufacturing the electrode includes the steps of layering an intermediate layer 12 on the surface of a substrate 11 (step A) and layering an active material layer 13 on the surface of the intermediate layer 12 (step B).

As described above, the intermediate layer 12 contains a conductive substance, an insulating filler, and a first binder. The active material layer 13 contains an active material and a second binder. Furthermore, each of the first binder and the second binder is an aqueous binder, or each of the first binder and the second binder is a nonaqueous solvent-based binder.

In the step A, the intermediate layer can be layered by coating an intermediate layer forming paste. The intermediate layer forming paste contains a conductive substance, an insulating filler, a first binder, and a dispersion medium. When the first binder is an aqueous binder, the dispersion medium is water. However, at this time, an organic solvent may be further contained as long as the solubility or the like of the first binder is not affected. Meanwhile, when the first binder is a nonaqueous solvent-based binder, the dispersion medium is an organic solvent. Similarly, at this time, water may further be contained as long as the solubility or the like of the first binder is not affected. Examples of the organic solvent include aprotic polar solvents such as NMP, DMF, DMA, and DMSO, protic polar solvents such as alcohol, and nonpolar solvents such as hexane and toluene. Among these, an aprotic polar solvent is preferable, and NMP is more preferable.

The intermediate layer forming paste can be coated by a known method. Normally, after coating, the coated film is dried to volatilize the dispersion medium. Thereby, the intermediate layer 12 can be obtained.

In the step B, the active material layer can be layered by coating an active material layer forming paste. This active material layer forming paste contains an active material, a second binder, and a dispersion medium. The dispersion medium in the active material layer forming paste is the same as the dispersion medium in the intermediate layer forming paste. When each of the first binder and the second binder is an aqueous binder, each of the dispersion medium of the intermediate layer forming paste and the dispersion medium of the active material layer forming paste is water. When each of the first binder and the second binder is a nonaqueous solvent-based binder, each of the dispersion medium of the intermediate layer forming paste and the dispersion medium of the active material layer forming paste is an organic solvent. The dispersion medium of the intermediate layer forming paste and the dispersion medium of the active material layer forming paste may be the same type of organic solvent. For example, both the dispersion media may be NMP.

The active material layer forming paste can be coated by a known method. Normally, after coating, the coated film is dried to volatilize the dispersion medium. Thereby, the active material layer 13 can be obtained. The coated film may be pressed in the thickness direction. Thereby, the adhesiveness of the active material layer can be improved. The pressing can be performed using a known apparatus such as a roll press.

<Energy Storage Device>

The energy storage device according to one embodiment of the present invention includes a positive electrode, a negative electrode, and an electrolyte. Hereinafter, a nonaqueous electrolyte secondary battery will be described as an example of the energy storage device. An electrode assembly is normally formed by alternately superposing the positive electrode and the negative electrode by layering or winding with a separator sandwiched therebetween. This electrode assembly is housed in a case, and the case is filled with a nonaqueous electrolyte. The nonaqueous electrolyte is interposed at least between the positive electrode and the negative electrode. As the case, a known aluminum case and resin case and the like which are normally used as a case of a secondary battery can be used.

(Positive Electrode and Negative Electrode)

The above-described electrode 10 in Fig. 1 is employed as at least one of the positive electrode and the negative electrode provided in the energy storage device. Each of the positive electrode and the negative electrode may be the electrode 10 in Fig. 1.

When the electrode 10 in Fig. 1 is not employed in one of the positive electrode and the negative electrode, a known electrode can be employed. Examples of the known electrode include (1) an electrode in which an active material layer is layered on the surface of a conductive substrate, for example, without an intermediate layer being interposed therebetween, (2) an electrode including an intermediate layer which does not contain an insulating filler, (3) an electrode in which an active material layer containing a nonaqueous solvent-based binder is layered on the surface of an intermediate layer containing an aqueous binder, and (4) an electrode in which an active material layer containing an aqueous binder is layered on the surface of an intermediate layer containing a nonaqueous solvent-based binder.

(Separator)

As a material of the separator, for example, a woven fabric, a nonwoven fabric, or a porous resin film or the like is used. Among these, a porous resin film is preferable from the viewpoint of strength, and a nonwoven fabric is preferable from the viewpoint of liquid retainability of the nonaqueous electrolyte. As a main component of the separator, a polyolefin such as polyethylene or polypropylene is preferable from the viewpoint of strength, and polyimide or aramid or the like is preferable from the viewpoint of resistance to oxidation and decomposition. These resins may be combined.

An inorganic layer may be disposed between the separator and the electrode (normally the positive electrode). The inorganic layer is a porous layer which is also called a heat-resistant layer or the like. It is also possible to use a separator with an inorganic layer formed on one surface of a porous resin film. The inorganic layer normally includes inorganic particles and a binder, and may contain other components.

(Nonaqueous Electrolyte)

As the nonaqueous electrolyte, a known nonaqueous electrolyte which is normally used in a common nonaqueous electrolyte secondary battery can be used. The nonaqueous electrolyte contains a nonaqueous solvent, and an electrolyte salt dissolved in the nonaqueous solvent.

As the nonaqueous solvent, a known nonaqueous solvent which is normally used as a nonaqueous solvent of a common nonaqueous electrolyte for a secondary battery can be used. Examples of the nonaqueous solvent include cyclic carbonate, chain carbonate, esters, ethers, amides, sulfone, lactones, and nitriles. Among these, it is preferable to use at least cyclic carbonate or chain carbonate, and it is more preferable to use cyclic carbonate and chain carbonate in combination.

Examples of the cyclic carbonate include ethylene carbonate (EC), propylene carbonate (PC), butylene carbonate (BC), vinylene carbonate (VC), vinyl ethylene carbonate (VEC), chloroethylene carbonate, fluoroethylene carbonate (FEC), difluoroethylene carbonate (DFEC), styrene carbonate, catechol carbonate, 1-phenyl vinylene carbonate, and 1,2-diphenyl vinylene carbonate.

Examples of the chain carbonate include diethyl carbonate (DEC), dimethyl carbonate (DMC), ethyl methyl carbonate (EMC), and diphenyl carbonate.

Examples of the electrolyte salt include lithium salts, sodium salts, potassium salts, magnesium salts, and onium salts, with lithium salts being preferable. Examples of the lithium salt include inorganic lithium salts such as $LiPF_6$, $LiPO_2F_2$, $LiBF_4$, $LiPF_2(C_2O_4)_2$, $LiClO_4$, and $LiN(SO_2F)_2$, and lithium salts having a fluorinated hydrocarbon group such as $LiSO_3CF_3$, $LiN(SO_2CF_3)_2$, $LiN(SO_2C_2F_5)_2$, $LiN(SO_2CF_3)(SO_2C_4F_9)$, $LiC(SO_2CF_3)_3$, and $LiC(SO_2C_2F_5)_3$.

The nonaqueous electrolyte may contain other additives. As the nonaqueous electrolyte, a salt which is melted at normal temperature, an ionic liquid, or a polymer solid electrolyte or the like can also be used.

(Method for Manufacturing Energy Storage Device)

The energy storage device can be manufactured by a known method. For example, the method for manufacturing the energy storage device includes the steps of producing a positive electrode; producing a negative electrode; preparing a nonaqueous electrolyte; forming an electrode assembly in which the positive electrode and the negative electrode are alternately superposed by layering or winding the positive electrode and the negative electrode with a separator interposed between the electrodes; housing the positive electrode and the negative electrode (electrode assembly) in a battery case; and injecting the nonaqueous electrolyte into the battery case. The energy storage device can be obtained by sealing an injection port after the injection. At least one of the positive electrode and the negative electrode can be produced by the method described above as the "method for manufacturing an electrode".

<Other Embodiments>

The present invention is not limited to the embodiments described above, and it is possible to implement the present invention not only by the aspects described above but also by an aspect with various changes and improvement. In the embodiments, the energy storage device having a form of the nonaqueous electrolyte secondary battery is mainly described, but another energy storage device may be implemented. Examples of the other energy storage device include a capacitor (an electric double layer capacitor or a lithium ion capacitor) and an energy storage device that includes an aqueous solution as an electrolyte.

Fig. 2 shows a schematic diagram of a rectangular energy storage device 20 (nonaqueous electrolyte secondary battery) which is an embodiment of an energy storage device according to the present invention. In Fig. 2, the inside of the case is seen through. In the energy storage device 20 shown in Fig. 2, an electrode assembly 21 is housed in a battery case 22. The electrode assembly 21 is formed by winding a positive electrode and a negative electrode with a separator interposed therebetween. The positive electrode is electrically connected to a positive electrode terminal 23 via a positive electrode lead 23', and the negative electrode is electrically connected to a negative electrode terminal 24 via a negative electrode lead 24'. As at least one of the positive electrode and the negative electrode, the above-described electrode 10 in Fig. 1 is employed. A nonaqueous electrolyte is injected into the battery case 22.

The configuration of the energy storage device according to the present invention is not particularly limited, and exemplified are a cylindrical battery, a prismatic battery (rectangular battery), and a flat-type battery. The present invention can also be achieved as an energy storage apparatus including the plurality of energy storage devices. Fig. 3 shows one embodiment of the energy storage apparatus. In Fig. 3, an energy storage apparatus 30 includes a plurality of energy storage units 25. Each of the energy storage units 25 includes a plurality of energy storage devices 20. The energy storage apparatus 30 can be mounted as a power source for a vehicle such as an electric vehicle (EV), a hybrid vehicle (HEV), or a plug-in hybrid vehicle (PHEV).

EXAMPLES

Hereinafter, the present invention is described further specifically by way of Examples. The present invention, however, is not to be limited to the following Examples.

[Example 1]

An intermediate layer forming paste was prepared by mixing acetylene black (AB) as a conductive substance, alumina as an insulating filler, and PVDF as a first binder in a mass ratio of 31.3 : 20.8 : 47.9. NMP was used as a dispersion medium. The alumina used had a bulk density of 0.05 g/cm$^3$ and a median diameter of 0.013 pm. The volume ratio of the mixed AB and alumina was 60:40.

A positive electrode active material (lithium nickel manganese cobalt composite oxide (LiNi$_{1/3}$Mn$_{1/3}$Co$_{1/3}$O$_2$)), a conductive agent (acetylene black), and a binder (PVDF) were mixed at a mass ratio of 94:3:3 to prepare an active material layer forming paste. NMP was used as a dispersion medium.

The intermediate layer was formed by coating the intermediate layer forming paste onto the surface of an aluminum foil as a substrate, followed by drying. The active material layer forming paste was coated onto the surface of the intermediate layer and dried to form an active material layer. As a result, an electrode of Example 1 was obtained. The coating amount (mass per unit area of the intermediate layer) of the intermediate layer forming paste was 4.5 g/m$^2$, and the average thickness of the obtained intermediate layer was 4.5 pm. The content of PVDF per unit volume of the intermediate layer determined from the mass ratio and the coating amount was 0.48 g/cm$^3$.

[Examples 2 to 6 and Comparative Examples 1 and 2]

Electrodes of Examples 2 to 6 and Comparative Examples 1 and 2 were obtained in the same manner as Example 1 except for the composition of an intermediate layer forming paste (mass ratio of AB, alumina and PVDF), the bulk density and median diameter of alumina used, the coating amount of the intermediate layer forming paste (mass per unit area of intermediate layer) and the average thickness of the intermediate layer. Table 1 also shows the volume ratio of the mixed AB and alumina, and the content of PVDF per unit volume of the intermediate layer.

[Measurement of Interlayer Resistance]

Each of the obtained electrodes was sandwiched between a pair of metal jigs in a thickness direction, and resistance between the metal jigs was measured. This value is shown in Table 2 as an interlayer resistance value.

[Measurement of Resistance Increase Rate Due to Temperature Change]

(Production of Resistance Measurement Cell)

Tomuseru (manufactured by Nippon Tomuseru Co., Ltd.) was used for measuring the resistance of the electrode. Tomuseru included a lower lid, an electrode plate, a separator, an electrode plate, a disc, a flat spring, and an upper lid. A separator previously immersed in a nonaqueous electrolyte was sandwiched between two positive electrodes, and these were placed at the inside of a packing existing on the stainless lower lid, At this time, the active material layers of the respective positive electrodes faced each other. Thereafter, the stainless steel disc and flat spring were placed, and finally the stainless steel upper lid was placed, and then fastened with a nut to be fixed. The fastening pressure at this time was set to 0.5 Nm.

The nonaqueous electrolyte and separator used are as follows.

(Nonaqueous Electrolyte)

In a mixed solvent in which ethylene carbonate (EC), ethyl methyl carbonate (EMC), and dimethyl carbonate (DMC) were mixed at a volume ratio of 30 : 35 : 35, lithium phosphate hexafluoride (LiPF$_6$) was dissolved in a concentration of 1.0 mol/l to produce a nonaqueous electrolyte. The water content in the nonaqueous electrolyte was set to less than 50 ppm.

(Separator)

As the separator, a 30 μm-thick polyethylene microporous film having an air permeability of about 600 seconds/100 cc and processed into a circular shape with a diameter of 1.6 cm was used.

(Measurement of Electrode Resistance)

A measurement cell was placed in a thermostatic bath, and alternating-current resistance at 1 kHz (amplitude: 5 mV) was measured while the temperature of the thermostatic bath was raised at 3°C/min. The temperature obtained by a temperature measuring terminal placed on the upper surface of the cell was recorded as the cell temperature. For measurement of the alternating-current resistance, an apparatus made by combining Model 1287 Potentio/Galvanostat and Model 1260 Frequency Response Analyzer each manufactured by Solartron Company was used. Based on the measured resistance value at 120°C and the lowest resistance value (lowest point) within the measurement temperature range, a resistance increase rate (%) was determined by the following formula. Table 2 shows the resistance value and the resistance increase rate at 120°C.

$$\text{Resistance increase rate (\%)} = \{(\text{resistance value at } 120°\text{C (m}\Omega) - \text{lowest point (m}\Omega))/\text{lowest point (m}\Omega)\} \times 100$$

[Standard Deviation of Electrode Surface Resistance Value]

On the surface of the active material layer of each of the electrodes, the surface resistance was measured at 10 locations by the two-terminal method. The standard deviation of the ten surface resistance values was determined. This value is shown in Table 2.

[Confirmation of Elution Amount of Intermediate Layer]

The extent of the elution amount of the binder was confirmed from the cross-sectional SEM of each of the obtained electrodes (positive electrode plate). The cross section (observation surface) of the positive electrode plate was exposed using a cross section polisher with a positive electrode plate sandwiched between glass plates. A measurement magnification ratio during cross-sectional SEM observation was adjusted in the range of 500 to 2000 times. The elution amount of the binder in the intermediate layer was determined from the degree of variation in the thickness of the intermediate layer in the obtained cross-sectional SEM image. The evaluation results are shown in Table 2.

[Table 1]

| | AB/alumina/ PVDF (mass ratio) | Alumina bulk density / g cm$^{-3}$ | Alumina median diameter / $\mu$m | AB/ alumina (volume ratio) | Mass per unit area /gm$^{-2}$ | Average thickness / $\mu$m | PVDF content /g cm$^{-3}$ |
|---|---|---|---|---|---|---|---|
| Example 1 | 31.3/20.8/47.9 | 0.05 | 0.013 | 60/40 | 4.5 | 4.5 | 0.48 |
| Example 2 | 10.9/43.5/45.7 | 0.05 | 0.013 | 20/80 | 4.7 | 4.0 | 0.54 |
| Example 3 | 5.5/49.5/45.1 | 0.05 | 0.013 | 10/90 | 5.0 | 6.0 | 0.38 |
| Example 4 | 38.7/25.8/35.6 | 0.05 | 0.013 | 60/40 | 3.5 | 5.0 | 0.25 |
| Example 5 | 50.7/33.8/15.5 | 0.05 | 0.013 | 60/40 | 2.6 | 4.0 | 0.10 |
| Example 6 | 12.8/70.1/17.1 | 0.41 | 0.7 | 60/40 | 7.5 | 5.0 | 0.26 |
| Comparative Example 1 | 50/0/50 | - | - | 100/0 | 3.8 | 4.5 | 0.42 |
| Comparative Example 2 | 10/0/90 | - | - | 100/0 | 5.1 | 5.0 | 0.92 |

[Table 2]

| | Interlayer resistance /mΩ | Tomuseru temperature raising resistance measurement | | Standard deviation of electrode surface resistance value | Elution amount of intermediate layer |
|---|---|---|---|---|---|
| | | Resistance at 120°C / mΩ | Resistance increase rate /% | | |
| Example 1 | 0.081 | 25.5 | 1044 | 0.007 | Less |
| Example 2 | 0.58 | 26.3 | 571 | 0.007 | Less |
| Example 3 | 4.0 | 58.0 | 276 | 0.019 | Less |
| Example 4 | 0.013 | 20.2 | 1074 | 0.016 | Less |
| Example 5 | 0.015 | 6.4 | 194 | 0.005 | Less |
| Example 6 | 0.030 | 15.6 | 494 | 0.011 | Less |
| Comparative Example 1 | 0.012 | 4.7 | 171 | 0.011 | Less |
| Comparative Example 2 | 0.24 | 29.8 | 724 | 0.028 | More |

As shown in Table 2, in Examples 1 to 6 in which the intermediate layer contains the insulating filler, the resistance increase rate is high, and the standard deviation of the surface resistance value is also small. Meanwhile, in Comparative Example 1 in which the intermediate layer does not contain the insulating filler; the content of the conductive substance is relatively large; and the content of the binder is relatively small, the standard deviation of the surface resistance value is small, but the resistance increase rate is low. In Comparative Example 2 in which the intermediate layer does not contain the insulating filler; the content of the conductive substance is relatively small; and the content of the binder is relatively large, the resistance increase rate is high, but the standard deviation of the surface resistance value is large. In Comparative Example 2, a large elution amount of the intermediate layer is considered to cause large variation in the surface resistance value.

Thus, when the intermediate layer contains only the conductive substance and the binder, it is impossible to achieve both a sufficient resistance increasing function when the temperature rises and suppression of variation in resistance. Meanwhile, the addition of the insulating filler to the intermediate layer in addition to the conductive substance and the binder is found to make it possible to achieve both a sufficient resistance increasing function when the temperature rises and suppression of variation in resistance.

INDUSTRIAL APPLICABILITY

The present invention can be applied to energy storage devices to be used as power sources for electronic devices such as personal computers and communication terminals, automobiles and the like, and energy storage device electrodes provided in the energy storage devices, and the like.

DESCRIPTION OF REFERENCE SIGNS

10 electrode
11 substrate
12 intermediate layer
13 active material layer
20 energy storage device
21 electrode assembly
22 case
23 positive electrode terminal
23' positive electrode lead
24 negative electrode terminal
24' negative electrode lead

25    energy storage unit
30    energy storage apparatus

**Claims**

1. An electrode comprising:

   a conductive substrate;
   an intermediate layer layered on a surface of the substrate and containing a conductive substance and a first binder; and
   an active material layer layered on a surface of the intermediate layer and containing a second binder, wherein:

      each of the first binder and the second binder is an aqueous binder, or each of the first binder and the second binder is a nonaqueous solvent-based binder; and
      the intermediate layer further contains an insulating filler.

2. The electrode according to claim 1, wherein the first binder is a polymer having a structural unit derived from vinylidene fluoride.

3. The electrode according to claim 1 or 2, wherein a volume of the insulating filler with respect to a total volume of the conductive substance and the insulating filler is 20% or more and 95% or less.

4. The electrode according to claim 1, 2 or 3, wherein a content of the conductive substance in the intermediate layer is 5% by mass or more and 60% by mass or less.

5. The electrode according to any one of claims 1 to 4, wherein a content of the insulating filler in the intermediate layer is 15% by mass or more and 80% by mass or less.

6. The electrode according to any one of claims 1 to 5, wherein a content of the first binder in the intermediate layer is 10% by mass or more and 50% by mass or less.

7. The electrode according to any one of claims 1 to 6, wherein:

   in the intermediate layer,
   a content of the conductive substance is 30% by mass or more and 40% by mass or less;
   a content of the insulating filler is 20% by mass or more and 30% by mass or less; and
   a content of the first binder is 30% by mass or more and 50% by mass or less.

8. The electrode according to any one of claims 1 to 7, wherein the electrode is a positive electrode.

9. An energy storage device comprising the electrode according to any one of claims 1 to 8.

10. A method for manufacturing an electrode, the method comprising the steps of layering an intermediate layer containing a conductive substance and a first binder on a surface of a conductive substrate; and layering an active material layer containing a second binder on a surface of the intermediate layer, wherein:

    each of the first binder and the second binder is an aqueous binder, or each of the first binder and the second binder is a nonaqueous solvent-based binder; and
    the intermediate layer further contains an insulating filler.

Fig. 1

Fig. 2

Fig. 3

## INTERNATIONAL SEARCH REPORT

| | International application No. |
|---|---|
| | PCT/JP2018/027651 |

A.  CLASSIFICATION OF SUBJECT MATTER
Int.Cl.  H01M4/13(2010.01)i, H01M4/139(2010.01)i, H01M4/62(2006.01)i,
H01M4/66(2006.01)i

According to International Patent Classification (IPC) or to both national classification and IPC

B.  FIELDS SEARCHED

Minimum documentation searched (classification system followed by classification symbols)
Int.Cl.  H01M4/13, H01M4/139, H01M4/62, H01M4/66

Documentation searched other than minimum documentation to the extent that such documents are included in the fields searched
      Published examined utility model applications of Japan      1922–1996
      Published unexamined utility model applications of Japan    1971–2018
      Registered utility model specifications of Japan            1996–2018
      Published registered utility model applications of Japan    1994–2018

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y | WO 2013/073012 A1 (TOYOTA MOTOR CORPORATION) 23 May 2013, claims, paragraphs [0041], [0049]–[0054], [0063], [0094], [0095]<br>& US 2014/0322600 A1, claims, paragraphs [0057], [0068]–[0074], [0083], [0127], [0128] & CN 103947032 A & KR 10-2014-0096359 A | 1–10<br>1–10 |

☒  Further documents are listed in the continuation of Box C.          ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24.08.2018 | 04.09.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.

PCT/JP2018/027651

C (Continuation).    DOCUMENTS CONSIDERED TO BE RELEVANT

| Category* | Citation of document, with indication, where appropriate, of the relevant passages | Relevant to claim No. |
|---|---|---|
| X | WO 2016/024394 A1 (GS YUASA INT LTD.) 18 February 2016, claims, paragraphs [0016]-[0027], [0041]-[0043] | 1-10 |
| Y | & US 2017/0229711 A1, claims, paragraphs [0019]-[0030], [0045]-[0047] & DE 112015003717 T5 & CN 106716683 A | 1-10 |
| Y | JP 2013-62105 A (HITACHI, LTD.) 04 April 2013, paragraph [0040] (Family: none) | 1-10 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015038876 A